(19) **Europäisches Patentamt / European Patent Office / Office européen des brevets**

(11) **EP 1 285 277 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
***G01P 5/08*** (2006.01)

(21) Anmeldenummer: **01943043.8**

(22) Anmeldetag: **10.05.2001**

(86) Internationale Anmeldenummer:
**PCT/DE2001/001763**

(87) Internationale Veröffentlichungsnummer:
**WO 2001/090762 (29.11.2001 Gazette 2001/48)**

(54) **VERFAHREN UND ANORDNUNG ZUR KONTAKTLOSEN BESTIMMUNG VON RÄUMLICHEN GESCHWINDIGKEITSVERTEILUNGEN IN ELEKTRISCH LEITFÄHIGEN FLÜSSIGKEITEN**

METHOD AND SYSTEM FOR THE CONTACTLESS DETERMINATION OF SPATIAL SPEED DISTRIBUTIONS IN ELECTRICALLY CONDUCTIVE FLUIDS

PROCEDE ET DISPOSITIF POUR LA DETERMINATION SANS CONTACT DE REPARTITIONS SPATIALES DE VITESSES DANS DES LIQUIDES ELECTRIQUEMENT CONDUCTEURS

(84) Benannte Vertragsstaaten:
**AT BE CH CY DE DK ES FI FR GB GR IE IT LI LU MC NL PT SE TR**

(30) Priorität: **25.05.2000 DE 10026052**

(43) Veröffentlichungstag der Anmeldung:
**26.02.2003 Patentblatt 2003/09**

(73) Patentinhaber: **Forschungszentrum Rossendorf e.V.**
**01328 Dresden (DE)**

(72) Erfinder:
• **STEFANI, Frank**
**01099 Dresden (DE)**
• **GERBETH, Gunter**
**01328 Dresden (DE)**
• **GUNDRUM, Thomas**
**01454 Ullersdorf (DE)**
• **ECKERT, Sven**
**01279 Dresden (DE)**
• **CRAMER, Andreas**
**01900 Grossröhrsdorf (DE)**

(56) Entgegenhaltungen:
**DE-A- 4 316 344          DE-A- 19 713 751**

• **STEFANI,F. AND GERBETH,G.: "Velocity reconstruction in conducting fluids from magnetic field and electric potential measurements" INVERSE PROBLEMS, Bd. 15, Nr. 3, 1999, Seiten 771-786, XP001030133 UK in der Anmeldung erwähnt**

**Beschreibung**

Die Erfindung betrifft ein Verfahren und eine Anordnung zur kontaktlosen Bestimmung der räumlichen Geschwindigkeitsverteilung in elektrisch leitfähigen Flüssigkeiten.

Ein bevorzugtes Einsatzgebiet der Einrichtung ist die Geschwindigkeitsbestimmung in heißen und/oder chemisch aggressiven Flüssigmetallen und Halbleiterschmelzen.

Die Tatsache, dass in einer elektrisch leitfähigen bewegten Flüssigkeit unter dem Einfluß eines externen Magnetfeldes (Primärfeld) elektrische Ströme induziert werden, die ein zusätzliches Magnetfeld und ein elektrisches Potenzial erzeugen, wurde beschrieben von Stefani, F. und Gerbeth, G. in "Velocity reconstruction in conducting fluids from magnetic field and electric potential measurements", Inverse Problems 15,1999, pp. 771-786. In dieser Arbeit wurde gezeigt, wie die räumliche Geschwindigkeitsverteilung der Flüssigkeit aus den im Außengebiet gemessenen induzierten Magnetfeldern und den an der Flüssigkeitsberandung gemessenen elektrischen Potenzialen unter Verwendung des Prinzips der kleinsten Quadrate bestimmt werden kann. Für eine Reihe von technischen Anwendungen stellt jedoch die Notwendigkeit der elektrischen Potenzialmessung an der Flüssigkeitsberandung einen schwerwiegenden Nachteil des angegebenen Verfahrens dar, insbesondere, wenn eine zusätzliche Installation von Meßelektroden an der Schnittfläche zwischen Behälterwand und Flüssigkeit praktisch unmöglich ist.

Dieser Nachteil betrifft auch die Verfahren zur Bestimmung der Geschwindigkeit in elektrisch leitfähigen Flüssigkeiten, wie sie in USP 5 390 548 und in DE 92 04 374 U1 angegeben wurden, welche ausschließlich auf der Messung von elektrischen Potenzialen an der Flüssigkeitsberandung beruhen.

Es wurde in DE 43 16 344 A1 eine kontaktlose Strömungsmeßeinrichtung beschrieben, die darauf beruht, dass in der Nähe einer magnetfelderzeugenden Komponente durch Turbulenz-elemente der Flüssigkeit ein zusätzliches magnetisches Signal entsteht. Durch Aufnahme dieses Signals an verschiedenen Meßpunkten und zeitliche Korrelierung kann auf Laufzeitunterschiede und somit auf die Flüssigkeitsgeschwindigkeit zwischen den verschiedenen Meßpunkten geschlossen werden.

Dabei muß aber vorausgesetzt werden, dass ein gegebenes Turbulenz-element nacheinander an zwei Meßpunkten vorbeifließt, was bedingt, dass schon im vorhinein die Strömungsstruktur in groben Zügen bekannt sein muß. Desweiteren können mit diesem Verfahren nur Tangentialkomponenten der Geschwindigkeit in Wandnähe bestimmt werden. Eine räumliche Bestimmung aller Geschwindigkeitskomponenten ist mit dem in DE 43 16 344 A1 angegebenen Verfahren nicht möglich.

Der Erfindung liegt die Aufgabe zugrunde, ein Verfahren und eine Anordnung zur Bestimmung von räumlichen Geschwindigkeitsverteilungen in elektrisch leitfähigen Flüssigkeiten vorzuschlagen, die für alle Geschwindigkeitskomponenten reproduzierbare Ergebnisse garantieren und in denen jeglicher Kontakt mit der Flüssigkeit oder den sie einschließenden Wänden vermieden wird.

Erfindungsgemäß wird die Aufgabe mit den in den Patentansprüchen angeführten Merkmalen gelöst.

Die Erfindung zur Bestimmung von Geschwindigkeitsfeldern v in elektrisch leitfähigen Flüssigkeiten mit der Leitfähigkeit s geht von der Tatsache aus, dass durch Anlegen eines äußeren Magnetfeldes $\mathbf{B}_0$ (Primärfeld) ein Strom j proportional zum Kreuzprodukt aus Geschwindigkeit und Primärfeld, d.h.

$$\mathbf{j} = s \, \mathbf{v} \times \mathbf{B}_0 \qquad\qquad\qquad (1)$$

induziert wird. Dieser Strom erzeugt seinerseits ein zusätzliches Magnetfeld **b**, welches auch außerhalb der Flüssigkeit gemessen werden kann. Es besteht allerdings das Problem, dass zusätzlich zu dem eingeprägten Strom $\mathbf{j} = s \, \mathbf{v} \times \mathbf{B}_0$ auch die sogenannten Sekundärströme an der Grenzfläche der Flüssigkeit zu dem außen gemessenen induzierten Magnetfeld b beitragen. Falls das elektrische Potenzial am Rand bekannt wäre, könnte der durch diese Sekundärströme bedingte Magnetfeldanteil abgespalten werden und das an den Grenzflächen gemessene elektrische Potenzial könnte als weitere Informationsquelle zur Lösung des inversen Problems zur Bestimmung der Geschwindigkeitsverteilung herangezogen werden. Letztgenanntes Verfahren ist bekannt aus Inverse Problems 15, 1999, pp. 771-786.

Im erfindungsgemäßen Verfahren soll die Messung des elektrischen Potenzials am Rand vermieden werden. Um trotzdem eine zur Bestimmung aller Geschwindigkeitskomponenten ausreichende Menge an Informationen bereitzustellen, werden nacheinander zwei unterschiedliche Primärfelder $\mathbf{B}_{0,1}$ und $\mathbf{B}_{0,2}$ angelegt und die jeweiligen induzierten Magnetfelder $b_1$ und $b_2$ im Außengebiet gemessen. Die beiden Primärfelder $\mathbf{B}_{0,1}$ und $\mathbf{B}_{0,2}$ müssen sich dabei im gesamten Flüssigkeitsvolumen in ihrer Richtung unterscheiden. Es ist nicht ausreichend, wenn sich die beiden Primärfelder nur in ihrem Betrag unterscheiden.

Dabei muß vorausgesetzt werden, dass das Geschwindigkeitsfeld für die beiden nacheinander erfolgenden Magnetfeldmessungen im wesentlichen zeitlich konstant bleibt.

Die Messung der unter dem Einfluß der Primärfelder $\mathbf{B}_{0,1}$ und $\mathbf{B}_{0,2}$ induzierten Magnetfelder $b_1$ und $b_2$ erfolgt

an einer Mehrzahl NB von Meßpunkten außerhalb der Flüssigkeit. Die Anzahl NB kann entsprechend der gewünschten räumlichen Auflösung der zu bestimmenden Geschwindigkeitsverteilung gewählt werden. Die Meßpunkte sollten das Volumen der Flüssigkeit möglichst gleichmäßig umschließen. Es ist ausreichend, an jedem Meßpunkt nur eine Magnetfeldkomponente zu messen. Es empfiehlt sich, dass die Richtung dieser Magnetfeldkomponente etwa senkrecht zur Tangentialfläche der Flüssigkeit am nächstgelegenen Randpunkt steht. Um die durch die Flüssigkeitsbewegung hervorgerufenen Magnetfeldkomponenten $b_{1,k}$ und $b_{2,k}$ am Meßpunkt k zu erhalten, sind von den eigentlichen Meßergebnissen $\mathbf{B}_{1,k}$ und $\mathbf{B}_{2,k}$ am Meßpunkt k die Anteile der extern angelegten Magnetfelder $B_{0,1,k}$ und $B_{0,2,k}$ am Meßpunkt k abzuziehen. Letztere müssen also für den strömungsfreien Zustand ausgemessen werden bzw. anderweitig, z.B. aus Berechnungen, bekannt sein.

Für eine geeignete Diskretisierung des Geschwindigkeitsfeldes gilt, dass die Anzahl der Punkte in der Schicht, die der Wand am nächsten liegt, kleiner oder gleich NB sein soll.

Aus den zwei für die beiden unterschiedlichen Primärfelder gemessenen Datensätzen des induzierten Magnetfeldes im Außengebiet wird unter Nutzung des Biot-Savart-Gesetzes das inverse Problem zur Geschwindigkeitsbestimmung gelöst. Dies erfolgt mittels der Methode der kleinsten Quadrate, wobei als zu minimierende Funktionale die mittleren quadratischen Abweichungen der durch die angenommene Geschwindigkeit induzierten Magnetfelder von den jeweils gemessenen Werten benutzt werden. Als weitere Information dient die Tatsache, dass das Geschwindigkeitsfeld als divergenzfrei angenommen wird, was im Verfahren durch den Einbau eines entsprechenden Funktionals realisiert wird. Zur Vermeidung unphysikalisch großer Geschwindigkeitsbeträge bei der Lösung des inversen Problems wird eine Regularisierung des Geschwindigkeitsfeldes durch Verwendung eines zusätzlichen Funktionals vorgenommen.

Ein wesentlicher Vorteil der Erfindung besteht darin, dass sie auch zur Geschwindigkeitsbestimmung in heißen und/oder chemisch aggressiven Flüssigkeiten geeignet ist, da jeder Kontakt mit der Flüssigkeit oder ihrer Berandung vermieden wird.

Die Erfindung wird nachstehend je an einem Ausführungsbeispiel für das Verfahren und für die Anordnung näher beschrieben.

Die zugehörige Zeichnung zeigt eine Prinzipdarstellung der erfindungsgemäßen Anordnung.

Ausführungsbeispiel für das Verfahren:

Zunächst kann konstatiert werden, dass jeweils ein Beitrag zu den außen gemessenen induzierten Magnetfeldern $\mathbf{b}_1$ und $\mathbf{b}_2$ sich aus dem Biot-Savart-Gesetz ergibt, worin die Terme s $\mathbf{v}$ x $\mathbf{B}_{0,1}$ bzw. s $\mathbf{v}$ x $\mathbf{B}_{0,2}$ für die jeweiligen Ströme im Flüssigkeitsvolumen stehen. Diese Beiträge sollen im folgenden durch Spaltenvektoren $\mathbf{b}_{b,1}$ und $\mathbf{b}_{b,2}$ mit jeweils NB Elementen dargestellt werden, welche mit den gesuchten Geschwindigkeiten über die Beziehungen

$$\mathbf{b}_{b,1} = \mathbf{M}_1\,\mathbf{v}\,, \qquad\qquad\qquad (2a)$$

$$\mathbf{b}_{b,2} = \mathbf{M}_2\;\mathbf{v} \qquad\qquad\qquad (2b)$$

verbunden sind. Der Spaltenvektor $\mathbf{v}$ beinhaltet dabei NV Elemente. Legt man eine Diskretisierung des Flüssigkeitsvolumens in NG Elemente zugrunde, so gilt NV=3 NG, da an jeder Diskretisierungsstelle je 3 Geschwindigkeitskomponenten zu bestimmen sind. $\mathbf{M}_1$ und $\mathbf{M}_2$ sind Matrizen vom Typ (NB,NV), die sich aus dem Biot-Savart-Gesetz ergeben und vom jeweiligen Primärfeld $\mathbf{B}_{0,1}$ und $\mathbf{B}_{0,2}$ abhängen.

Ein jeweils weiterer Beitrag zum induzierten Magnetfeld, der im folgenden als Spaltenvektor $\mathbf{b}_{r1}$ bzw. $\mathbf{b}_{r2}$ mit jeweils NB Elementen bezeichnet werden soll, ergibt sich aus der Berücksichtigung der elektrischen Potenziale an der Flüssigkeitsberandung. Im Gegensatz zum Verfahren, wie es in Inverse Problems 15, 1999, pp. 771-786 angegeben wurde, steht im vorliegenden Verfahren das elektrische Potenzial nicht als Meßgröße zur Verfügung. Um die Geschwindigkeit im Sinne der Methode der kleinsten Quadrate aus den gemessenen Magnetfeldern rekonstruieren zu können, müssen die über das elektrische Potenzial am Rand vermittelten geschwindigkeitsabhängigen Beiträge zu den induzierten Magnetfeldern als lineare Funktionale der Geschwindigkeit formuliert werden.

Zur Ableitung dieser Beziehung wird die Berandung des Flüssigkeitsvolumens durch eine Anzahl NU von Stützstellen des elektrischen Potenzials möglichst gleichmäßig überdeckt. Während die Anzahl NB der Meßstellen des Magnetfeldes und folglich auch die Anzahl der Punkte NG, an denen die Geschwindigkeit bestimmt werden kann, aus meßtechnischen Gründen auf einige zehn bis etwa einhundert begrenzt sein dürfte, kann die Anzahl NU der Stützstellen des elektrischen Potenzials wesentlich größer sein. Bezeichnet man mit $\mathbf{u}_1$ und $\mathbf{u}_2$ die Spaltenvektoren mit NU Elementen der elektrischen Potenziale (in Abhängigkeit vom angelegten Primärfeld) so gelten für diese die Matrixgleichungen

$$\mathbf{u}_1 = C\,\mathbf{u}_1 + \mathbf{N}_1\,\mathbf{v}\,, \tag{3a}$$

$$\mathbf{u}_2 = C\,\mathbf{u}_2 + \mathbf{N}_2\,\mathbf{v}\,. \tag{3b}$$

Die genaue Form der Matrix C, welche nur von der Geometrie der eingeschlossenen Flüssigkeit abhängt, sowie der Matrizen $\mathbf{N}_1$ und $\mathbf{N}_2$, welche auch vom angelegten Primärfeld abhängt, kann unmittelbar aus der Formel 16, S. 775 der Veröffentlichung Inverse Problems 15,1999, pp. 771-786, abgeleitet werden. Zur Lösung der singulären Gleichungen für $\mathbf{u}_1$ und $\mathbf{u}_2$ wird das aus der Magnetoenzephalographie bekannte Deflationsverfahren eingesetzt (siehe Hämälainen, M., Hari, R., Ilmoniemi, R.J., Knuutila, J., Lounasma, O.V: Magnetoencephalographie-theory, instrumentation, and application studies of the working human brain, Rev. Mod. Phys. 65, 1993, S. 414-497, speziell: S.429-430). Im Ergebnis ergibt sich für die elektrischen Potenziale am Rand:

$$\mathbf{u}_1 = (\mathbf{I\text{-}C})^{-1}\,\mathbf{N}_1\,\mathbf{v}\,, \tag{4a}$$

$$\mathbf{u}_2 = (\mathbf{I\text{-}C})^{-1}\,\mathbf{N}_2\,\mathbf{v}\,, \tag{4b}$$

wobei die Matrix $\mathbf{I}$ die Einheitsmatrix vom Typ (NU,NU) ist und die Matrix $(\text{I-C})^{-1}$ als die invertierte Matrix von $(\mathbf{I\text{-}C})$ im Sinne des Deflationsverfahrens zu verstehen ist.
Die Verknüpfung zwischen den Spaltenvektoren $\mathbf{b}_{r1}$ bzw. $\mathbf{b}_{r2}$ mit den Spaltenvektoren $\mathbf{u}_1$ bzw. $\mathbf{u}_2$ kann nun in der Form

$$\mathbf{b}_{r1} = \mathbf{P}\,\mathbf{u}_1 = \mathbf{P}\,(\mathbf{I\text{-}C})^{-1}\,\mathbf{N}_1\,\mathbf{v}\,, \tag{5a}$$

$$\mathbf{b}_{r2} = \mathbf{P}\,\mathbf{u}_2 = \mathbf{P}\,(\mathbf{I\text{-}C})^{-1}\,\mathbf{N}_2\,\mathbf{v} \tag{5b}$$

beschrieben werden, wobei sich die genaue Form der Matrix $\mathbf{P}$ vom Typ (NB,NU) aus Formel 8, S. 773 der Veröffentlichung Inverse Problems 15,1999, pp. 771-786, ergibt. Im Verfahren müssen die Matrizen

$$\mathbf{W}_1 = \mathbf{P}\,(\mathbf{I\text{-}C})^{-1}\,\mathbf{N}_1\,, \tag{6a}$$

$$\mathbf{W}_2 = \mathbf{P}\,(\mathbf{I\text{-}C})^{-1}\,\mathbf{N}_2 \tag{6b}$$

für eine gegebene Geometrie der eingeschlossenen Flüssigkeit nur einmal bestimmt werden. Dies ist aus verfahrenstechnischer Sicht von hohem Belang, da die Matrizen $\mathbf{W}_1$ und $\mathbf{W}_2$ nur noch vom Typ (NB,NV) sind. Die Effekte der elektrischen Potenziale an der möglicherweise großen Anzahl NU von Stützstellen sind in den relativ kleinen Matrizen $\mathbf{W}_1$ und $\mathbf{W}_2$ in summarischer Weise enthalten.
Zusammenfassend kann nun der lineare Zusammenhang zwischen der gesuchten Geschwindigkeit $\mathbf{v}$ an NG Punkten und den gemessenen induzierten Magnetfelder $\mathbf{b}_1$ und $\mathbf{b}_2$ wie folgt dargestellt werden:

$$\mathbf{b}_1 = (\mathbf{M}_1 + \mathbf{W}_1)\,\mathbf{v} \tag{7a}$$

$$b_2 = (M_2 + W_2) \; v \; . \tag{7b}$$

Somit ist ein lineares Gleichungssystem zur Bestimmung der Geschwindigkeitskomponenten entstanden, welches im Sinne der Methode der kleinsten Quadrate mit einem Standardverfahren zur Lösung linearer Gleichungssysteme gelöst werden kann.

Dieses Gleichungssystem erweist sich allerdings für eine größere Anzahl zu bestimmender Geschwindigkeiten als schlecht konditioniert und muß deshalb in einem zweiten Verfahrensschritt regularisiert werden. Das mathematische Verfahren der Regularisierung schlecht konditionierter inverser Probleme ist umfassend abgehandelt in Engl, H.W., Hanke, M. and Neubauer, A., "Regularization of Inverse Problems", Kluwer Academic Publishers, Dordrecht, Boston, London, 1996. Im Fall der vorliegenden Erfindung bietet sich als Ausführungsform des Regularisierungsverfahrens die sogenannte Tichonov-Regularisierung an, in welcher zum Funktional der mittleren quadratischen Restabweichungen für die zwei gemessenen Magnetfelder ein Funktional addiert wird, welches dafür sorgt, dass eine geeignete Norm der gesuchten Geschwindigkeit mitminimiert wird. Die Methode der Tichonov-Regularisierung und die noch im weiteren zu besprechende Methode der L-Kurve wurden z.B. beschrieben in Hansen, P. C., "Analysis of discrete ill-posed problems by means of the L-curve", SIAM Review, Vol. 34, No. 4, pp. 561-580, December 1992. Für den Zweck des erfindungs gemäßen Verfahrens erweisen sich als Regularisierungsfunktional das Funktional des mittleren quadratischen Geschwindigkeitsbetrags sowie das Funktional der mittleren quadratischen Krümmung der Geschwindigkeit als geeignet. Die zweite Variante ist aus physikalischer Sicht vorzuziehen, da das Geschwindigkeitsfeld in vielen hydrodynamischen Anwendungen als relativ glatt angenommen werden kann. Dieses Funktional wird mit einem zunächst noch freien Regularisierungsparameter gewichtet. Darüberhinaus wird zur Absicherung der Divergenzfreiheit des gesuchten Geschwindigkeitsfeldes ein Funktional der mittleren quadrierten Geschwindigkeitsdivergenz hinzugefügt.

In einem letzten Schritt wird das System der Normalgleichungen für das regularisierte Gesamtfunktional für einen Satz von Regularisierungsparametern gelöst, welcher das relative Gewicht des Regularisierungsfunktionals im Verhältnis zu den Funktionalen der mittleren quadratischen Restabweichung über einen weiten Bereich skalieren soll. Für jeden der Regularisierungsparameter wird dann die Vorwärtsaufgabe zur Bestimmung der aus der jeweiligen Lösung resultierenden Magnetfelder gelöst. Danach werden die mittleren quadratischen Restabweichungen von den tatsächlich vorliegenden Werten sowie die mittlere quadratische Krümmung des Geschwindigkeitsfeldes bestimmt. Daraufhin wird der Logarithmus der mittleren quadratischen Krümmung über dem Logarithmus der gewichteten mittleren quadratischen Restabweichung aufgetragen. Die entstehende Kurve hat typischerweise eine L-förmige Gestalt (Tichonovsche L-Kurve). Eine physikalisch realistische Lösung des inversen Problems kann erfahrungsgemäß an der Stelle angenommen werden, wo die L-Kurve am stärksten gekrümmt ist. An dieser Stelle wird ein sinnvoller Kompromiß erzielt zwischen Minimierung der mittleren quadratischen Restabweichung und Minimierung der mittleren quadratischen Krümmung.

Ausführungsbeispiel für die Anordnung:

Zu dieser Ausführungsform gehören zwei Spulenpaare 1 und 2, die jeweils mit einer Meß- und Steuereinheit 3 und 4 für die in diesen Spulenpaaren fließenden Ströme verbunden sind, eine Mehrzahl von Magnetfeldsensoren 5 außerhalb der Flüssigkeit, die mit einem Signalprozessor 6 zur Aufnahme der Meßwerte verbunden sind, eine diesem Signalprozessor nachgeschaltete Auswerte- und Speichereinheit 7 und ein finales Ausgabegerät 8.

Der Winkel zwischen den Spulenpaaren wird orthogonal gewählt. Die beiden Spulen der jeweiligen Spulenpaare werden vom Strom in der gleichen Richtung durchflossen. Durchmesser und Abstand der Spulen werden so gewählt, dass eine relativ gleichmäßige Durchdringung des Flüssigkeitsvolumens mit dem erzeugten Primärfeld gesichert ist. Zweckmäßigerweise kann die Geometrie der Spulenpaare in Anlehnung an diejenige der Helmholtzspulen gewählt werden. Mit Hilfe der Meß- und Steuereinheiten 3 und 4 werden nun periodisch wechselnd die Ströme in den Spulenpaaren 1 und 2 ein- und ausgeschaltet. Die zeitliche Periode dieses Wechsels sollte größer sein als die typische Diffusionszeit des Magnetfeldes in der Flüssigkeit. Durch das Umschalten der Ströme entstehen zwei sich in ihrer Richtung unterscheidende primäre Magnetfelder $B_{01}$ und $B_{02}$. Es empfiehlt sich, die Meß- und Steuereinheiten 3 und 4 mit der Auswerte- und Speichereinheit 7 zu verbinden, um in dieser eine Kompensation der zeitabhängigen primären Magnetfelder vorzunehmen.

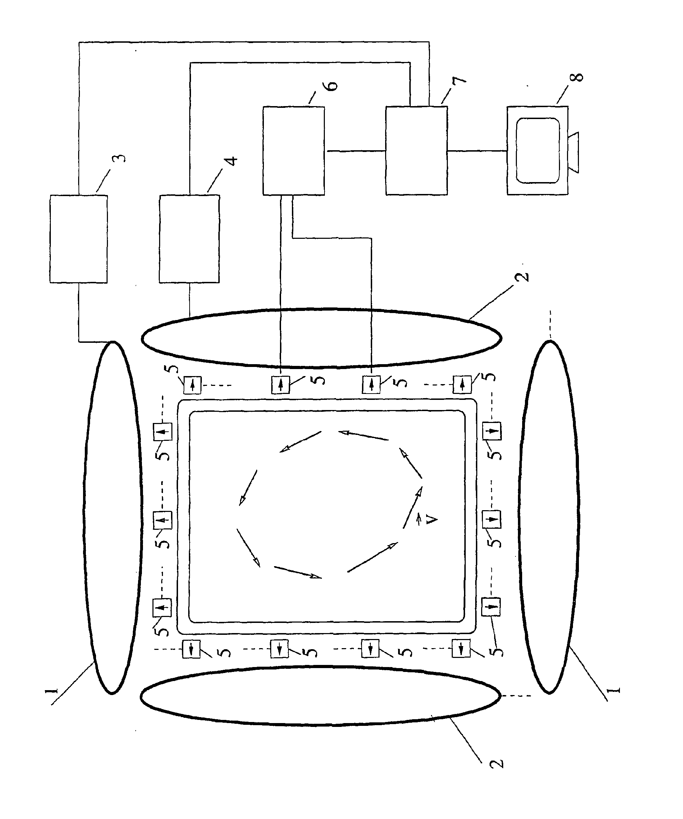

Aus Gründen der Übersichtlichkeit der Darstellung werden in der Zeichnung nur die Verbindungen von zwei Magnetfeldsensoren 5 zum Signalprozessor 6 explizit dargestellt und die restlichen Verbindungen mit unterbrochenen Linien angedeutet. Aus demselben Grund werden auch nur die Verbindungen je einer Spule der Spulenpaare 1 bzw. 2 mit den jeweiligen Meß- und Steuereinheiten 3 bzw. 4 explizit dargestellt und die anderen Verbindungen mit unterbrochenen Linien angedeutet.

Die mittlere Stärke B der extern erzeugten primären Magnetfelder $B_{01}$ und $B_{02}$ ist an der gegebenen Problemstellung auszurichten. Soll die von Einflüssen durch Magnetfelder möglichst ungestörte Geschwindigkeitsverteilung bestimmt werden, so ist die Stärke des Magnetfeldes so zu wählen, dass der Wechselwirkungsparameter $N = s\,B^2\,L\,/(d\,V)$ viel kleiner als 1 ist (dabei ist s die elektrische Leitfähigkeit der Flüssigkeit, d die Dichte der Flüssigkeit, L eine typische Längenausdehnung und V eine typische Geschwindigkeit der Flüssigkeit). Für Anwendungen, bei denen Magnetfelder dem Prozeß bereits inhärent sind, kann das an sich schon vorhandene Magnetfeld für die erfindungsgemäße meßtechnische Anwendung benutzt werden. Hinsichtlich der bestimmbaren Geschwindigkeitsbeträge muß festgehalten werden, dass die magnetische Reynoldszahl $Rm = s\,m_0\,L\,V$ (dabei ist $m_0$ die Permeabilität des Vakuums) kleiner als 1 sein muß, was allerdings auch für nahezu alle in Frage kommenden technischen und industriellen Anwendungen garantiert ist. Anderenfalls werden die durch die Geschwindigkeitsbewegung induzierten Magnetfelder von derselben Größenordnung wie das angelegte externe Magnetfeld, und die für das erfindungsgemäße Verfahren implizit zugrundegelegten Näherungen versagen.

Es kann auf das Spulenpaar 2 sowie auf die Meß- und Steuereinheit 4 verzichtet werden, wenn die zwei sich in ihrer Richtung unterscheidenden primären Magnetfelder $B_{01}$ und $B_{02}$ allein durch das Spulenpaar 1 erzeugt werden, welches bei gleicher Polung der beiden Spulenströme innerhalb der Flüssigkeit ein nahezu konstantes axiales Magnetfeld und bei entgegengesetzter Polung ein sogenanntes cusp-Feld erzeugt. Für diesen Fall ist es vorteilhaft, das Spulenpaar 1 als Helmholtzspulenpaar auszulegen.

**Patentansprüche**

1.  Verfahren zur kontaktlosen Bestimmung von räumlichen Geschwindigkeitsverteilungen in elektrisch leitfähigen Flüssigkeiten, wobei die durch die Wechselwirkung der Flüssigkeitsbewegung mit mindestens zwei nacheinander angelegten und sich in ihrer - Richtung unterscheidenden primären Magnetfeldern induzierten Magnetfelder an einer Mehrzahl von Erfassungsstellen außerhalb der Flüssigkeit gemessen werden, **dadurch gekennzeichnet, dass** die Geschwindigkeitsverteilung im gesamten Flüssigkeitsvolumen unter Verwendung des Prinzips der kleinsten Quadrate bestimmt wird und dabei als zu minimierendes Funktional die Summe der mittleren quadratischen Abweichungen der für das jeweils angelegte Primärfeld berechneten induzierten Magnetfelder von den jeweils gemessenen induzierten Magnetfeldern benutzt wird, wobei ein solcher linearer Zusammenhang zwischen der zu bestimmenden Geschwindigkeit und den berechneten induzierten Magnetfeldern verwendet wird, in dem sowohl der von den im Flüssigkeitsvolumen eingeprägten Strömen herrührende Anteil als auch der durch die sekundärströme, d.h. die an der Flüssigkeitsberandung induzierten elektrischen Potenziale , vermittelte Anteil berücksichtigt wird, wobei letzterer Anteil durch Lösung einer Oberflächenintegralgleichung für das induzierte elektrische Potenzial bestimmt wird, ohne dass die an der Flüssigkeitsberandung induzierten elektrischen Potenziale gemessen werden müssen.

2.  Verfahren nach Anspruch 1, **dadurch gekennzeichnet, dass** zur Lösung der Oberflächenintegralgleichung für das elektrische Potenzial das Deflationsverfahren verwendet wird.

3.  Verfahren nach Anspruch 1, **dadurch gekennzeichnet, daß** die Divergenzfreiheit des Geschwindigkeitsfeldes durch Minimierung des Funktionals der mittleren quadratischen Divergenz des Geschwindigkeitsfeldes als zusätzliche Information verwendet wird.

4.  Verfahren nach Anspruch 1, **dadurch gekennzeichnet, daß** zur Vermeidung unphysikalisch großer Geschwindigkeitsbeträge die Tichonov-Regularisierung verwendet wird.

5.  Verfahren nach Anspruch 4, **dadurch gekennzeichnet, daß** für die Tichonov-Regularisierung die mittlere quadratische Geschwindigkeit oder die mittlere quadratische Krümmung des Geschwindigkeitsfeldes als Regularisierungsfunktional verwendet wird.

6.  Anordnung zur kontaktlosen Bestimmung von räumlichen Geschwindigkeitsverteilungen in elektrisch leitfähigen Flüssigkeiten, bestehend aus einem magnetfelderzeugenden Spulenpaar (1) zur Erzeugung eines das Flüssigkeitsvolumen durchdringenden primären Magnetfeldes, einer Mehrzahl von außerhalb der Flüssigkeit angeordneten Magnetfeldsensoren (5) zur Messung der durch die Wechselwirkung der Flüssigkeitsbewegung mit den erzeugten Primärfeldem induzierten Magnetfelder, einem nachgeordneten Signalprozessor (6) zur Aufnahme der Messwerte der Magnetfeldsensoren und einer Ausgabeeinheit (8), **dadurch gekennzeichnet, dass** eine Meß- und Steuereinrichtung (3) zur Umpolung des Spulenstromes in einer der beiden Spulen des Spulenpaares (1) vorgesehen ist, wodurch ein Wechsel des primären Magnetfeldes von einem im Flüssigkeitsvolumen nahezu homogenen Magnetfeld zu einem cusp-Feld vorgenommen wird, und dass eine Auswerte-und Speichereinheit (7) zur Bestimmung der Geschwindigkeitsverteilung im gesamten Flüssigkeitsvolumen vorgesehen ist.

**7.** Anordnung nach Anspruch 6, **dadurch gekennzeichnet, daß** die Meß- und Steuereinheit (3) zur Kompensation der zeitlichen Änderungen des primären Magnetfeldes mit der Auswerte- und Speichereinheit (7) verbunden ist.

**8.** Anordnung zur kontaktlosen Bestimmung von räumlichen Geschwindigkeitsverteilungen in elektrisch leitfähigen Flüssigkeiten, bestehend aus einem magnetfelderzeugenden Spulenpaar (1) zur Erzeugung eines das Flüssigkeitsvolumen durchdringenden primären Magnetfeldes, einer Mehrzahl von außerhalb der Flüssigkeit angeordneten Magnetfeldsensoren (5) zur Messung der durch die Wechselwirkung der Flüssigkeitsbewegung mit den erzeugten Primärfeldem induzierten Magnetfelder, einem nachgeordneten Signalprozessor (6) zur Aufnahme der Messwert der Magnetfeldsensoren und einer Ausgabeeinheit (8), **dadurch gekennzeichnet, dass** ein weiteres Spulenpaar (2) in einem Winkel zum Spulenpaar (1) angebracht ist und dass Steuereinrichtungen (3 und 4) zum abwechselnden Ein- und Ausschalten der Spulenströme in den Spulenpaaren (1 und 2) vorgesehen sind, wodurch ein Wechsel der Richtung des angelegten primären Magnetfeldes vorgenommen wird, und dass eine Auswerte- und Speichereinheit (7) zur Bestimmung der Geschwindigkeitsverteilung im gesamten Flüssigkeitsvolumen vorgesehen ist.

**9.** Anordnung nach Anspruch 8, **dadurch gekennzeichnet, daß** dieMeß-und Steuereinheiten (3 und 4) zur Kompensation der zeitlichen Änderungen der primären Magnetfelder mit der Auswerte- und Speichereinheit (7) verbunden sind.

**Claims**

**1.** Method for the contactless determination of spatial speed distributions in electrically conductive fluids, during which the magnetic fields, induced by the interaction of the liquid motion with at least two successively applied primary magnetic fields differing in their directions, are measured at a plurality of measuring points out of the fluid, **characterised in that** the speed distributions in the entire fluid volume are determined by means of the principle of the smallest squares and that, for this, the sum of the mean square deviations between the induced magnetic fields, calculated for the respectively applied magnetic field, and the respectively measured induced magnetic fields is used as the functional to be minimised, such a linear relation between the speed to be determined and the magnetic fields induced being used by taking into account both the proportion resulting from the impressed currents in the liquid volume and the proportion resulting from the secondary currents, i.e. from the electrical potentials induced at the periphery of the liquid, the last proportion being determined by solving a surface integral equation for the induced electrical potential, without the electrical potentials at the periphery of the liquid having to be measured.

**2.** Method according to claim 1, **characterised in that** the deflation method is used in order to solve the surface integral equation for the electrical potential.

**3.** Method according to claim 1, **characterised in that** the freedom of divergence of the velocity field through minimisation of the functional of the mean square divergence of the velocity field is used as additional information.

**4.** Method according to claim 1, **characterised in that** the Tikhonov regularisation is used in order to avoid unphysically large speed amounts.

**5.** Method according to claim 4, **characterised in that**, for the Tikhonov regularisation, the mean square speed or the mean square curvature of the velocity field is used as the regularisation functional.

**6.** System for the contactless determination of spatial speed distributions in electrically conductive fluids, comprised of a magnetic field-generating coil pair (1) for the generation of a primary magnetic field penetrating the liquid volume, a plurality of magnetic field sensors (5) positioned out of the liquid for the measurement of the magnetic fields induced by the interaction of the liquid motion with the generated primary magnetic fields, a downstream signal processor (6) for the acquisition of the measuring values of the magnetic field sensors and an output unit (8), **characterised in that** a measuring and control unit (3) is provided for the polarity reversal of the coil current in one of the two coils of the coil pair (1), by means of which the primary magnetic field of an almost homogenous magnetic field in the liquid volume is changed into a cusp field, and **characterised in that** an analysis and storage unit (7) is provided in order to determine the speed distribution in the entire liquid volume.

**7.** System according to claim 6, **characterised in that** the measuring and control unit (3) is connected with the analysis and storage unit (7) in order to compensate for the temporal changes of the primary magnetic field.

8. System for the contactless determination of spatial speed distributions in electrically conductive fluids, comprised of a magnetic field-generating pair of coils (1) for the generation of a primary magnetic field penetrating the liquid volume, a plurality of magnetic field sensors (5) positioned out of the liquid for the measurement of the magnetic fields induced by the interaction of the liquid motion with the generated primary magnetic fields, a downstream signal processor (6) for the acquisition of the measuring values of the magnetic field sensors and an output unit (8), **characterised in that** a further coil pair (2) is installed in an angle to the first coil pair (1) and that control installations (3 and 4) for the alternate switching on and off of the coil currents in the coil pairs (1 and 2) are provided, which leads to a change of the direction of the applied primary magnetic field, as well as **characterised in that** an analysis and storage unit (7) is provided in order to determine the speed distribution in the entire liquid volume.

9. System according to claim 8, **characterised in that** the measuring and control units (3 and 4) are connected with the analysis and storage unit (7) in order to compensate for the temporal changes of the primary magnetic fields.

**Revendications**

1. Procédé pour la détermination sans contact de répartitions spatiales de vitesses dans des liquides électriquement conducteurs, les champs magnétiques, induits par l'action mutuelle du mouvement de liquide avec au moins deux champs magnétiques primaires disposés l'un derrière l'autre et se différenciant dans leur direction, étant mesurés sur un certain nombre de points de saisie hors du liquide,
   **caractérisé en ce que** la répartition de vitesses est déterminée dans l'ensemble du volume de liquide en utilisant le principe des plus petits carrés et ici, comme fonction à minimiser, la somme des écarts carrés moyens des champs magnétiques induits calculés pour le champ primaire respectivement constitué est utilisée par les champs magnétiques induits mesurés respectivement; un tel contexte linéaire entre la vitesse à déterminer et les champs magnétiques induits calculés étant utilisé où tant la partie venant des courants empreints dans le volume de liquide que la partie transmise par les courants secondaires, c'est-à-dire les potentiels électriques induits aux bords du liquide, sont pris en compte, la dernière partie étant déterminée par la solution d'une équation intégrale de surface pour le potentiel électrique induit sans qu'il soit nécessaire de mesurer les potentiels électriques induits aux bords du liquide.

2. Procédé selon la revendication 1 **caractérisé en ce que** pour la solution de l'équation intégrale de surface pour le potentiel électrique induit, il est utilisé le procédé de déflation.

3. Procédé selon la revendication 1 **caractérisé en ce que** la liberté de divergence du champ de vitesse est utilisée par la minimisation de la fonction des divergences carrées moyennes du champ de vitesse comme information supplémentaire.

4. Procédé selon la revendication 1 **caractérisé en ce que** pour éviter d'importantes sommes de vitesse de type non physique, il est utilisé la régularisation de Tikhonov.

5. Procédé selon la revendication 4 **caractérisé en ce que** pour la régularisation de Tikhonov, la vitesse carrée moyenne ou la courbe carrée moyenne du champ de vitesse est utilisée comme fonction de régularisation.

6. Dispositif pour la détermination sans contact de répartitions spatiales de vitesses dans des liquides électriquement conducteurs composé d'une paire de bobines (1) générant un champ magnétique pour générer un champ magnétique primaire pénétrant dans le volume de liquide, d'une certaine quantité de détecteurs de champs magnétiques (5) disposés hors du liquide pour mesurer les champs magnétiques induits par l'action mutuelle du mouvement du liquide avec les champs primaires générés, d'un processeur à signaux (6) placé en aval pour enregistrer les valeurs mesurées des détecteurs de champs magnétiques et d'une unique de sortie (8),
   **caractérisé en ce qu'**une unité de mesure et de commande (3) est prévue pour inverser la polarité du courant de bobine dans l'une des deux bobines de la paire de bobines (1), provoquant ainsi un changement du champ magnétique primaire, d'un champ magnétique pratiquement homogène dans le volume de liquide en un champ cusp, et qu'une unité d'analyse et de mémorisation (7) pour déterminer la répartition des vitesses est prévue dans l'ensemble du volume de liquide.

7. Dispositif selon la revendication 6 **caractérisé en ce que** l'unité de mesure et de commande (3) est reliée à l'unité d'analyse et de mémorisation (7) pour compenser les modifications temporelles du champ magnétique primaire.

8. Dispositif pour la détermination sans contact de répartitions spatiales de vitesses dans des liquides électriquement conducteurs composé d'une paire de bobines (1) générant un champ magnétique pour générer un champ magnétique primaire pénétrant dans le volume de liquide, d'une certaine quantité de détecteurs de champs magnétiques (5) disposés hors du liquide pour mesurer les champs magnétiques induits par l'action mutuelle du mouvement du liquide avec les champs primaires générés, d'un processeur à signaux (6) placé en aval pour enregistrer les valeurs mesurées des détecteurs de champs magnétiques et d'une unique de sortie (8), **caractérisé en ce qu'**une autre paire de bobines (2) est disposée dans un angle par rapport à la paire de bobines (1) et que les dispositifs de commande (3 et 4) sont prévus pour activer et désactiver alternativement les courants de bobines dans les paires de bobines (1 et 2), provoquant ainsi un changement de la direction du champ magnétique primaire constitué et qu'une unité d'analyse et de commande (7) est prévue pour déterminer la répartition des vitesses dans l'ensemble du volume de liquide.

9. Dispositif selon la revendication 8 **caractérisé en ce que** l'unité de mesure et de commande (3 et 4) est reliée à l'unité d'analyse et de mémorisation (7) pour compenser les modifications temporelles des champs magnétiques primaires.